Europäisches Patentamt

European Patent Office

Office européen des brevets

(11) Publication number: **0 330 796**
**A2**

# EUROPEAN PATENT APPLICATION

(21) Application number: **88480088.9**

(51) Int. Cl.⁴: **G06F 15/20**

(22) Date of filing: **06.12.88**

The title of the invention has been amended (Guidelines for Examination in the EPO, A-III, 7.3).

(30) Priority: **07.01.88 US 142109**

(43) Date of publication of application:
**06.09.89 Bulletin 89/36**

(84) Designated Contracting States:
**DE FR GB**

(71) Applicant: **International Business Machines Corporation**
**Old Orchard Road**
**Armonk, N.Y. 10504(US)**

(72) Inventor: **Wenz, David George**
**1506 Ridge Court - N.E.**
**Rochester, MN. 55904(US)**
Inventor: **Youngers, David Nicholas**
**3609 14th Avenue N.W.**
**Rochester, MN. 55901(US)**

(74) Representative: **Vekemans, André**
**Compagnie IBM France Département de Propriété Intellectuelle**
**F-06610 La Gaude(FR)**

(54) **Processing data of a document having multiple distributed formats.**

(57) A document has format items embedded in and distributed throughout the text data items. To produce a selfstanding segment of such a document for transfer to another storage or processor, the document ahead of the desired segment is searched for relevant format items, and an updated set of format parameters is constructed. This set is transferred along with the data items as an initial format item for the segment.

EP 0 330 796 A2

## PROCESSING DATA HAVING MULTIPLE DISTRIBUTED FORMATS

### Background of the Invention

The present invention relates electronic data processing, and more particularly concerns a method of transferring a segment of a formatted document from a remote processing system such that the transferree system can process it with the correct format.

The invention is useful in conjunction with word processing, electronic mail and similar applications. Increasingly, such applications are performed in multiple distributed processing systems connected by communications facilities ranging from simple terminal protocols using cables to international packet-switching store-and-forward networks employing multi-hop satellites. Also, the information sent over such facilities is increasingly in the form of "documents" which contain both data items and format items. Such a document describes itself, in that the imbedded format items direct a processor how to present the data items to a display, printer, or other device.

For example, the publicly available IBM Document Content Architecture presents format structures and codes for imbedding among the data characters of a document. This allows the data items to carry only the meaning to be conveyed, while the format items organize the data items into a structure of lines, pages, sections, etc., and specify type styles and fonts, alphabets and symbols, footnote placement, outline numbering, and other features.

Conventional communications protocols can handle the transfer of entire documents which combine format items with the data items. But sometimes it is desirable to transfer only a segment of a document between one processing system and another, or to isolate it for other reasons. The document segment itself then may not include within its boundaries all of the format items required to specify the entire format of the data items in the segment. For example, a format item at the beginning of a document may specify an initial or default format for pages lines, and type style. Later in the document, another format item may specify a change to double-spaced lines, and still later a third format item may specify a change to a bold character font. If the document segment begins at a still later point, then the format sent with its data must specify the page format from the initial format item, the line format from the second format item, and the character format from the third. This then becomes the initial format for the segment (and in turn may be further modified by format items in the segment itself). That is, the information required to format the isolated document segment is not necessarily contained in any single format item or other information associated with the document. There is not even a header or separate format block which could be accessed and sent with the data items in the document segment. Rather, the required format information is spread throughout the document at arbitrary locations among (or associated with) the data items.

Conventional data processing systems can only deal with such documents by transferring the entire document to a remote location by allowing the remote processor continuing access to the entire document for further format information, or by preformatting the segment into a nonrevisable form before transmission. They cannot transfer or isolate a document segment as a self-sufficient, revisable entity for further processing.

These limitations degrade communications efficiency and reduce the functionality of the overall network. They become particularly troublesome in multi-processor word processing, where document portions are downloaded from a multi-user host computer to a personal computer for editing.

### Summary of the Invention

Although the document being accessed may be quite large, the data needed at any one time is the information associated with the text being viewed. The remainder of the document may, or may not, be required at some point in time depending on the end user's interaction with the program.

The present invention allows a document with embedded or distributed format information to be divided into self-standing portions which can be transferred or otherwise isolated for further processing. These portions are provided with information sufficient to specify their format completely, even though this information may not be available in any single unit in the original document.

Broadly speaking, the invention combines source and destination processors each having a storage and connected by a communications facility. A data entity having both data items and embedded format items resides in the source storage. Searching the data entity for successive format items located before a desired segment builds a set of updated parameters specifying the complete format of the segment. Transferring this updated format along with the data items in the segment to the destination processor produces a self-standing entity segment which the destination processor can manipulate without further access to the entire entity in the source processor.

Other aspects of the invention as well as advantages and features will become apparent from the following description of a preferred embodiment.

Brief Description of the Drawings

FIG. 1 shows a data-processing system in which the invention can be implemented.

FIG. 2 illustrates the structure of an entire document stored in the source processor of Fig. 1.

FIG. 3 shows the layout of a document segment stored in the remote destination processor of Fig. 1.

FIG. 4 is a flow chart of the document serving program of Fig 1.

FIG. 5 is a flow chart of the remote processing program of Fig. 1.

FIG. 6 details the process data/request function of Fig. 4.

FIG. 7 shows the receive page segment function of Fig. 5.

Description of Preferred Embodiment

The specific implementation to be described is incorporated in the publicly available IBM DisplayWrite/36 (DW/36) word-processing program product and in the text assist (TA) function of the IBM PC Support/36 (PCS/36) program product. DisplayWrite/36 runs on the IBM System/36 data-processing system and the text assist function runs on an IBM personal Computer.

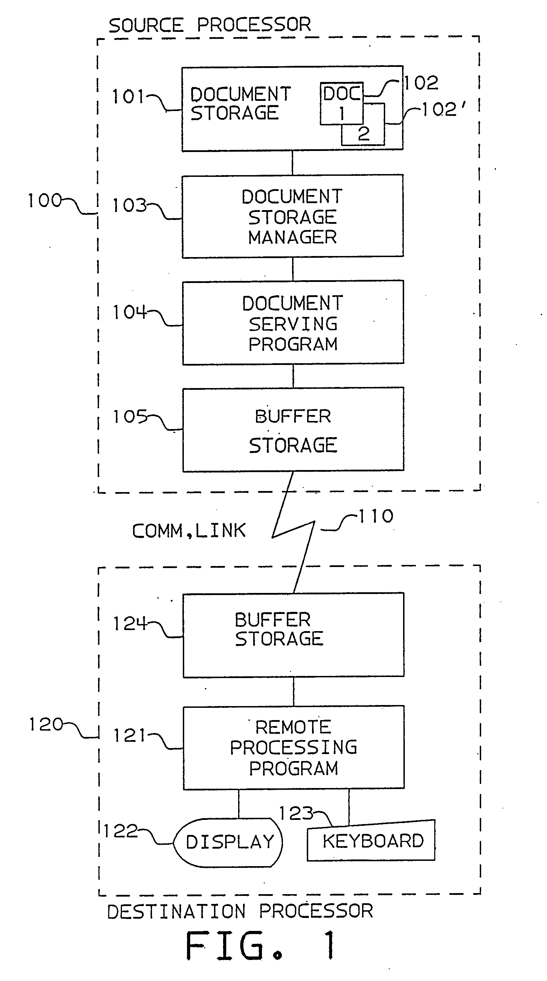

FIG. 1 is a system diagram showing a source data processor 100 connected by a communications facility 110 to a remote destination data processor 120. Source processor 100 is a publicly available IBM System/36 data processor. Communications facility 110 may be a conventional twinaxial cable link or local area network (LAN). Destination processor 120 is an IBM Personal Computer (PC) 120.

Disk storage 101 stores documents such as 102 and 102'. Documents are stored as files of individual records. As explained more fully below, the records are of a conventional variable-length type, and each may contain a line of text characters, a collection of format parameter values, or both in some cases. Document serving program 104 of DW/36 uses document storage manager 103 to access the documents. In this implementation, document storage manager 103 is the folder management service (FMS) function of the System/36 System Support Program (SSP) operating system..

Remote processing program 121 receives document data from the source processor 100 and stores the data in a buffer 124. This data is used to output the formatted document on display 122. The user enters changes to the document data with keyboard 123. This input is processed by program 121, and changes are communicated back to the document serving program 104 in a conventional manner. Program 121 may also send data to other devices, such as a printer (not shown).

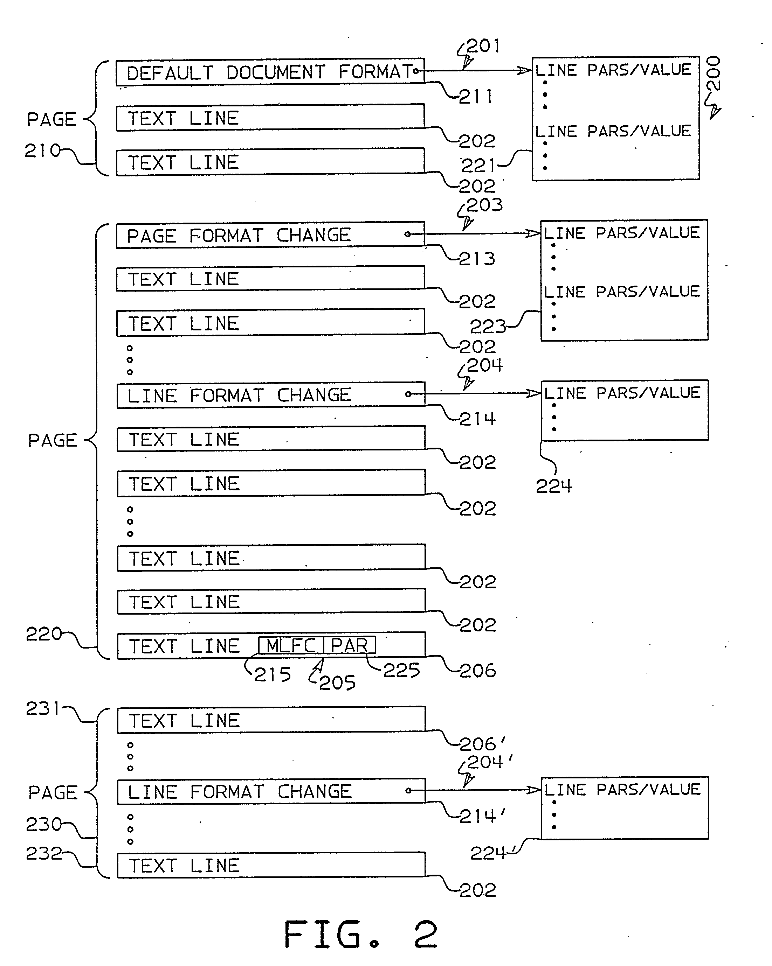

FIG. 2 shows the logical structure 200 of an entire document 102 as it is stored on secondary storage disk 101, Fig. 1, in the form known as DW/36 Revisable Text. This logical structure closely follows that of the IBM Document Content Architecture, which is commonly used to interchange documents among networked computer systems, and is defined in "Document Content Architecture: Revisable-Form-Text Reference", IBM publication SC23-0758. The primary focus of these data-stream forms is to define the content of a document by providing the text and format information to control the presentation of the text information on a display or a printer. The format information contains general characteristics of a document page, and information to define the appearance of individual lines and characters. Control codes or format items are imbedded among or in the text data items to represent the format information; thus, they can be changed independently of the text data to modify the overall presentation of the document without disturbing the text itself.

Document 200 is divided into a number of pages such as 210-230. The first page 210 contains an initial format item or record 201 specifying default layout information. The following data items or records 202 contain text lines. Also, as shown for page 220, further format items or records 203, 204, and 205 may specify changes to the page layout, the line layout, or character layout. Format items affect only data items which logically follow them in the document.

Page format items 203, also known as page layout changes, specify format control information or parameters for controlling the format of text on an entire page. These include parameters that can be changed only on page boundaries, such as paper width, first and last typing lines, and header/footer contents. Since any change which may occur at a line boundary may also occur at a page boundary, page-format items 203 also specify the parameters described below for line-format items 204. A page format item 203 includes an entire record 213, containing a unique identifying code, and containing a pointer to a related record 223; values for each parameter occupy predetermined locations along the length of the latter record. The initial default format item 201, comprising records 211 and 221, is identical to a page format item except for a flag in record 211, which is not relevant to the present invention.

Line-format items 204, also known as line layout changes, contain format control information or parameters specifying the layout of entire lines of text. These include parameters that can be changed on line boundaries, such as line-to-line spacing, margin and tab locations, and justification. Items 204 may also specify any character-format parameters described below. A line format item is also has a complete record 214 containing another another unique identifying code and a pointer to a further record 224; again values for each parameter occupy specific locations within record 224.

Character format items 205, also known as mid-line changes, contain format control information or parameters pertaining to individual text characters. The parameters in this category are those that can be changed within a line of text, such as underlining, type fonts, and colors. As a detail of this implementation, physical storage records contain entire lines of text. A special code sequence 215 within the data record identifies the location of a character-format change within the line, and is followed by a code sequence 225 which specifies which parameter is to be changed and the new value of that parameter. Unlike the page and line format items, the character or mid-line format item record 215 includes only the particular parameter which changes at that point; control codes and subcodes indicate which parameter changes. More than one character format parameter may change at the same character location, but each parameter change requires its own code sequence within the data record.

The format of the text data items in any line, such as 206, may be determined by any previous mid-line format item 205, and by any previous line format item 204, by any previous page format item 203, as well as by the default or initial format item 201. The processing of any segment of a document, such as page 230, requires knowledge of the format parameter values in effect at the beginning boundary 231 of the segment. This format information must be made available to the remote processing program 121, Fig. 1, either by making the entire document 102 available or by collecting the formatting information and making that collected information available as an initial format item for the segment. (Any format items within the segment, such as line-format item 204', do not affect the initial format of the segment, and may be ignored for the present purposes.) Reference numeral 232 denotes the ending boundary of segment 230. Segments may be logical units of document 200 such as pages, or they may contain a predetermined number of records in storage, or some other measure.

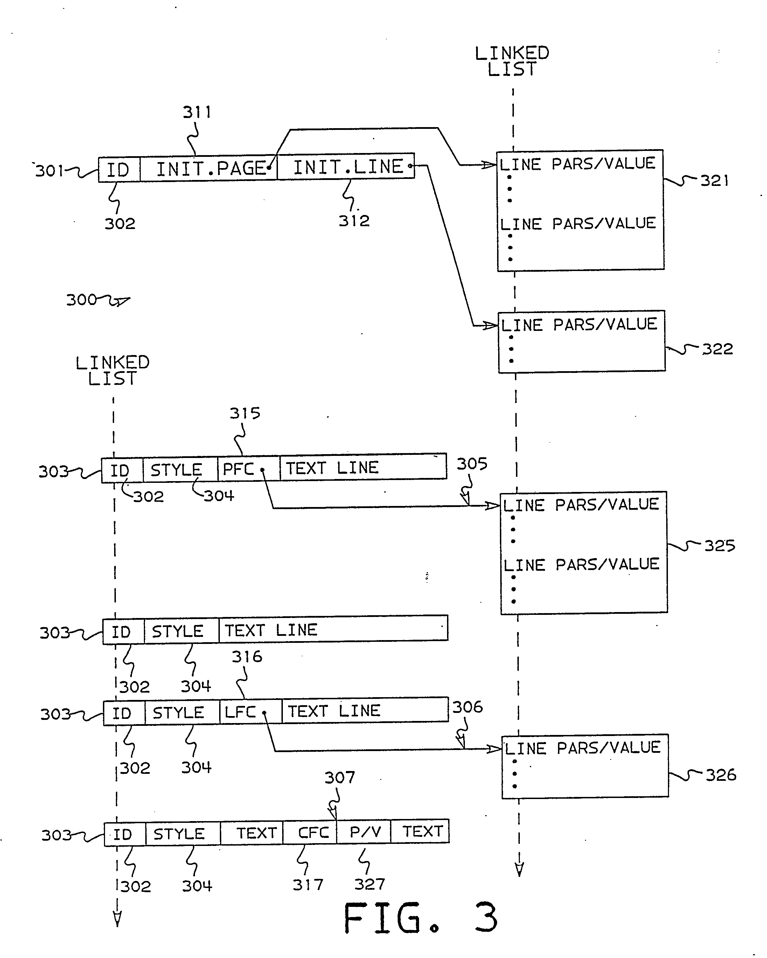

FIG. 3 shows the structure of a page segment 300 as it exists in communication buffer storage 105 of destination processor 120, Fig. 1. Segment 300 corresponds to page 230 of document 200, Fig. 2; that is, segment 300 contains all of the text characters or data items of document 200 between a beginning boundary 231 and an ending boundary 232, and all the format information needed to lay out those characters properly. Since buffer 105 is a random-access memory rather than a disk, it does not have "records" as units of storage; nevertheless, it is convenient to organize the data in this buffer into variable-length blocks analogous to the records of a bulk storage.

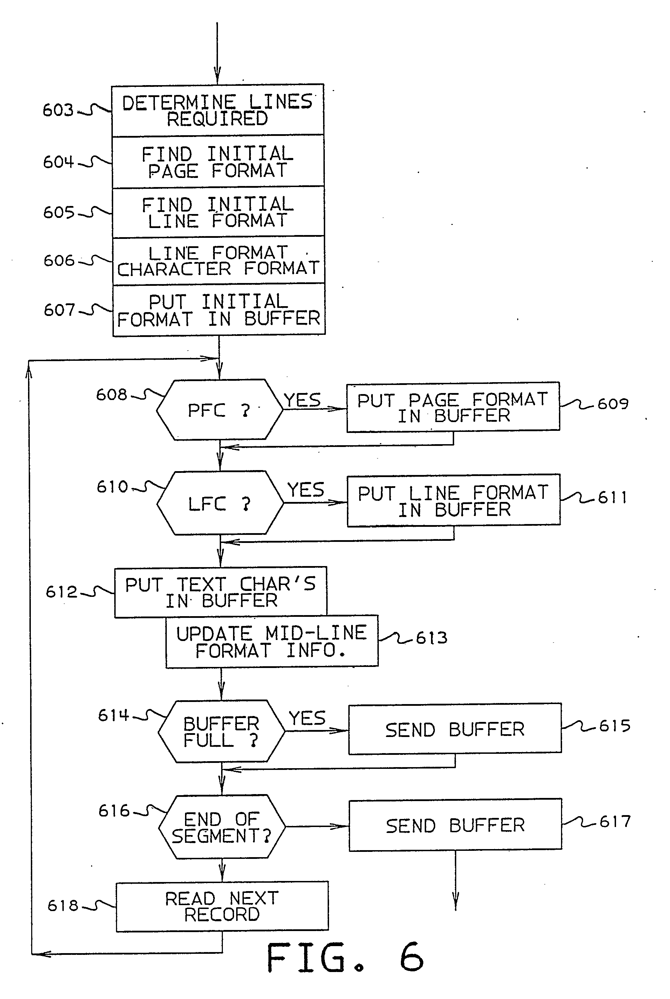

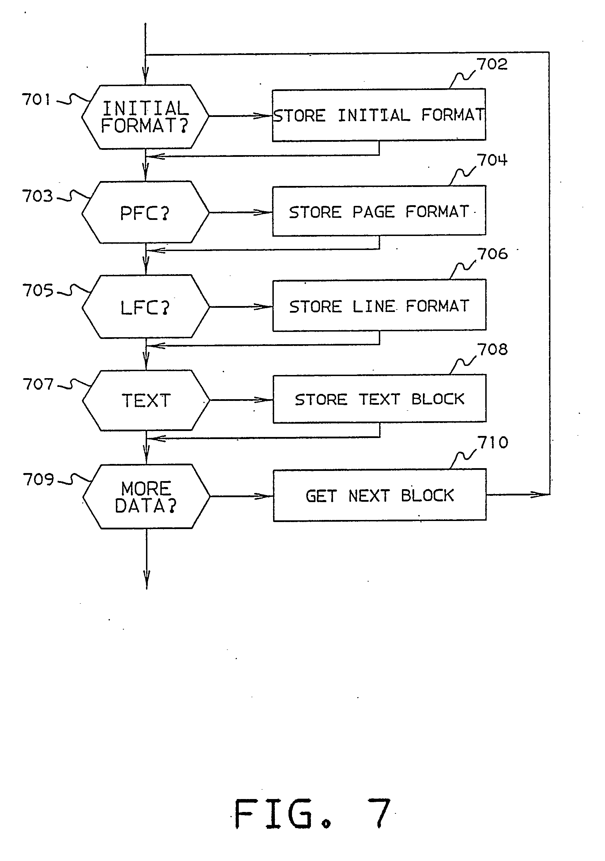

An initial format item 301 stored at the beginning of segment 300 holds the active initial page layout informa tion, in the form of values for the page parameters described in connection with format item 203, Fig. 2. Item 301 has an identifying code 302, followed by a pointer 311 to a block 321, which latter block holds particular parameter values at specific locations along its length. Also contained in initial format item 301 is pointer 312 to a block 322 containing parameter values for the active initial line layout information. The parameters are those of format item 204, Fig. 2. Strictly speaking, an initial line format item is redundant over an initial page format item, since the latter includes all the parameters of the former. This implementation, however is simplified by using both. Because of the way in which they are constructed by the programs of Figs. 6 and 7, the initial page format block 321 may specify line format parameter values inconsistent with those of line format block 322; but processing pointer 312 after pointer 311 in the buffer 105 causes the line parameters in 321 to be overridden by those in item 322. When the active line layout is the same as the active page layout, then it is not duplicated in the buffer.

Text line data blocks 303 follow items 301 and 302. Each text-line data item 303 contains the active mid-line format parameters 304 for its line, in the form of values for those character format parameters of item 205, Fig. 2 which are useful to the processing program 121, Fig. 1.

Format changes within segment 300 employ format items interspersed within the the text line data blocks. Page format item 305 has a code sequence 315 identifying it as a page format change and pointing to another block 325 containing parameter values for all of the page and line format parameters. Line format item 306 has another code sequence 316 identifying it as a line format change and pointing to another block 326 containing only those parameter values applicable to line format.

Any embedded mid-line character format changes 307 comprise a code 317 identifying a character format change, and an immediately following sequence within line data 303 indicating which parameter is to change, and what the new value of that parameter is to be as a code sequence 327.

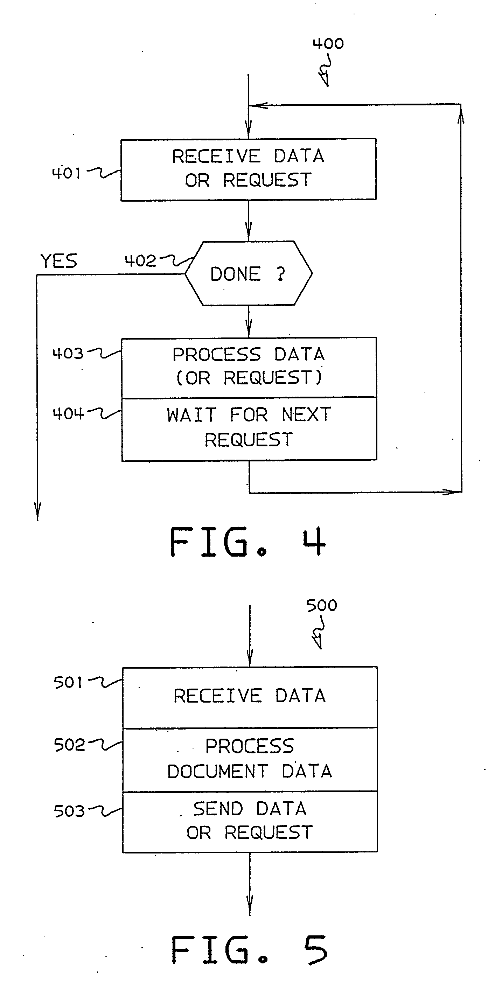

FIG. 4 is a high-level flowchart of the document serving program 104, Fig. 1. This code, located in and executed by source processor 100, provides partial document access functions to the remote processing program 121 in destination processor 120. Document serving functions are typically initiated by a request from the user from destination processor 120.

Block 401 receives any information that is sent from the remote processing program 121, Fig. 1. This includes processing any changed data items from the page segment being processed remotely and parsing any requests. Changed data items, such as deleted, inserted or modified data lines and format items, are updated back to the original document 102 in a conventional manner over communications facility 110 as required. Requests may include requests for transferring document segments and for other conventional functions such as for termination of the conversation.

Block 402 ends interaction between the two processes when the remote processing program 121 requests that processing should terminate. When this occurs the document serving function ends, at arrow 405. If processing continues, control passes to block 403.

Block 403 processes segment requests by determining the set of data items and format items that must be transferred in order to service the request for a particular segment. A request can be for an entire page by its page number, or by line number within a page and a specified number of lines; many other specifications are also possible. Block 403 then places the appropriate information in communications buffer 105, Fig. 1, and sends it to communications buffer 124, where remote processing program 121 can find it.

Block 404 waits for a request from the remote processing program 121, FIG. 1, and passes control to block 401 when communications buffer 105 contains a request. The process then repeats.

FIG. 5 is a high-level flowchart of the remote processing program 121, Fig. 1. This code is located in and executed by remote destination processor 120; it may provide conventional document processing functions such as viewing a document and revising a document as well as executing the transfer operations for the present invention.

Block 501 receives segment data (that is, the data items and format items) from the document serving program 104, Figs. 1 and 4, and stores this data for further processing.

Block 502 handles the conventional processing of the segment data, including formatting the data items on display 122, Fig. 1, and conventional user-specified editing functions invoked from keyboard 121. The editing or revision functions include inserting text characters, flowing lines of text into paragraphs, moving text, copying text, and deleting text.

Block 503 sends changed data items, such as deleted, inserted, or modified lines, to the document serving program 104, Fig. 1 in a conventional manner, as required. Block 503 also transmits other requests including conventional requester functions such as a request for termina tion as well as the partial document access function of a request for a page segment, as described in connection with Fig. 4.

FIG. 6 details the processing of data and requests 403 in the document serving program 104, Figs. 1 and 4. Block 603 first reads the request to determine the beginning and ending boundaries of the data items needed to fulfill the request, e.g. as shown at 231 and 232, Fig. 2.

Block 604 determines the initial page format of the segment to be transferred, that is, the values of the page-format parameters active just before the beginning boundary of the segment. This is done by searching backward from the beginning boundary, checking the top of each page until it finds a page format item 203, then stores that into a buffer location. Block 605 determines the line format of the segment by searching backward, checking each record for the presence of a line format item 204; this search also terminates at the first encountered page format item 203, since the latter includes the correct active line parameter values. The current line format item (whether it actually came from an item 203 or an item 204) is then stored as a line format item for transfer.

Block 606 determines the values of the character format parameters active at the beginning of the segment. This could also be done in theory by a backward search through line records, ending at either a line format change 204 or a page format item 203, since these items contain current values of character format parameters. However, for other reasons not relevant to the invention, this particular implementation scans forward from the previous page boundary through each line record to the beginning of the segment, starting with the character format parameter values in the page format item and modi fying them as character format items are encountered. Block 607 places the initial format item 301, as determined in blocks 604 and 605, into buffer 105.

Blocks 608 through 616 move all of the lines in the requested page segment into 105, processing one record per iteration.

If block 608 determines that the current record is a page format item, block 609 places a page format item 305, Fig. 3, into buffer 105; this item contains all the parameter values of the corresponding page format item 203 in Fig. 2. Blocks 610 and 611 place a line format item 306 into buffer 105; these contain all the parameter values of the corresponding items 204 in Fig. 2. Block 612 places text lines (data items) into the buffer. Block 613 saves the new parameter values from any mid-line format items in the line by scanning the text line for mid-line format change codes as the line is being placed in the buffer.

When the buffer is full, block 614 passes control to block 615 to send the current buffer of document data in a conventional manner over communications facility 110 to buffer 124. Block 616 determines whether the entire page segment has been sent. If so, block 617 sends the last buffer. Otherwise, block 618 obtains the next record and passes control back to block 608 to continue loading buffer 105.

FIG. 7 details block 501 of Fig. 5, the storage of the document segment in buffer 124 of Fig. 1. Blocks 701-710 receive and store all of the data and format items from source processor 100, one block per iteration, in a form which can be accessed by program 121. Although not relevant to the invention, this form comprises a single block for the initial format pointers 311 and 312, a first linked list containing the parameter records 321, 322, 325 and 326 of the initial, page, and line format items, and a second linked list containing the text data items 303. (Items 303 still contain the pointers 315 and 316 to their parameter records.)

Block 701 checks the identifying code of the current block to determine whether it is an initial format item. If it is, block 702 stores it for subsequent processing. Block 703 checks to determine whether the current record is a page format item; if it is, block 704 stores it. Blocks 705 and 706 repeat this process for line format items. Blocks 707 and 708 perform the same function for data items.

Block 709 determines whether additional blocks must be stored. If so, block 710 obtains the next segment block, and blocks 701-708 repeat. After all the blocks in the segment have been received and stored, control passes to block 502, Fig. 5, for processing.

As stated previously, the invention is useful in other environments as well. For example, the distributed format items might be held in a data structure separate from that containing the information items, and merely keyed into certain locations among the data items. The source and destination storages and processors could be coupled in many different ways, tightly or loosely. The desired segment might not require an actual transfer, but might need only to be isolated in some way from the entire data entity. Applications other than word processing may use the concept of this invention. Electronic mail and office systems employ documents using such formatting, and could benefit from partial access according to the invention. Data entities other than documents might use the invention; data bases and other large blocks of data may often transferred from one place to another as smaller portions rather than as complete files or structures.

## Claims

1. A method of transferring between source and destination storage means a segment of a data entity or document having data items and format items imbedded among said data items, characterized in that it comprises the steps of:

(a) determining beginning and ending boundaries of said segment in said source storage means;

(b) creating an initial format item for said segment from at least one of said document format items;

(c) searching said document ahead of said segment for further ones of said document format items;

(d) updating said initial format item from said further document format items;

(e) transferring to said destination storage means those data items and format items of said data entity located between said beginning and said ending boundaries of said segment;

(f) transferring said initial format item to said destination storage means as an initial format of said segment.

2. The method of Claim 1, characterized in that said data entity is a document, and said data items include text characters.

3. The method of Claim 2, characterized in that said format items include character style specifications.

4. The method of Claim 2, characterized in that said data items further include lines of said text characters.

5. The method of Claim 4, characterized in that said format items further include line style specifications.

6. The method of Claim 4, characterized in that said data items further include pages of said lines.

7. The method of Claim 6, characterized in that said format items further include page style specifications.

8. The method of any one of Claims 1-7, characterized in that said data entity includes plural levels of said data items, and said format items specify said format parameters associated with different ones of said levels.

9. A method of transferring between source and destination data processors a segment of a data entity having data items and a plurality of format items each associated with a particular location within said entity and specifying at least one parameter of those of said data items beyond said particular location, characterized in that it comprises the steps of:

(a) said destination processor specifying beginning and ending boundaries of said segment to said first processor;

(b) said source processor searching said format items ahead of said beginning boundary and extracting current values of said parameters therefrom;

(c) said source processor creating from said current values of said parameters an initial format item for said segment;

(d) said source processor transferring to said destination processor said initial format item and any further of said format and data items between said beginning and ending boundaries of said segment;

(e) said destination processor performing operations upon said segment in accordance with said initial and said further format items.

10. The method of Claim 9 characterized in that step (e) comprises:

(1) said destination processor displaying at least a part of said segment to an operator in accordance with said initial and further format items;

(2) said destination processor receiving commands from said operator;

(3) said destination processor modifying said further data items of said segment in accordance with said commands.

11. The method of Claim 10, characterized in that said data entity is a document having multiple levels of said data items, and wherein said parameters specify characteristics of different ones of said levels.

SOURCE PROCESSOR

101 — DOCUMENT STORAGE | DOC 1 ~102 / ~102' / 2

100 — 103 — DOCUMENT STORAGE MANAGER

104 — DOCUMENT SERVING PROGRAM

105 — BUFFER STORAGE

COMM,LINK ~110

124 — BUFFER STORAGE

120 — 121 — REMOTE PROCESSING PROGRAM

122 — DISPLAY   123 — KEYBOARD

DESTINATION PROCESSOR

# FIG. 1

DEFAULT DOCUMENT FORMAT —201→ LINE PARS/VALUE 200
211
PAGE 210 TEXT LINE
202
TEXT LINE 221
202 LINE PARS/VALUE
203

PAGE FORMAT CHANGE —→ LINE PARS/VALUE
213
TEXT LINE
202 LINE PARS/VALUE
TEXT LINE 223
202
204
LINE FORMAT CHANGE —→ LINE PARS/VALUE
214
PAGE TEXT LINE
202
TEXT LINE
202 224

TEXT LINE
202

TEXT LINE
202
220 TEXT LINE  MLFC PAR
215  205  225  206

231 TEXT LINE
206'
204'
PAGE LINE FORMAT CHANGE —→ LINE PARS/VALUE
230 214'
232 TEXT LINE
224'
202

# FIG. 2

IBM — RO 988 002

FIG. 3

400

401 — RECEIVE DATA
OR REQUEST

YES ← 402 — DONE ?

403 — PROCESS DATA
(OR REQUEST)

404 — WAIT FOR NEXT
REQUEST

# FIG. 4

500

501 — RECEIVE DATA

502 — PROCESS
DOCUMENT DATA

503 — SEND DATA
OR REQUEST

# FIG. 5

603 — DETERMINE LINES
REQUIRED

604 — FIND INITIAL
PAGE FORMAT

605 — FIND INITIAL
LINE FORMAT

606 — LINE FORMAT
CHARACTER FORMAT

607 — PUT INITIAL
FORMAT IN BUFFER

608 — PFC ?  —YES→  PUT PAGE FORMAT
IN BUFFER  — 609

610 — LFC ?  —YES→  PUT LINE FORMAT
IN BUFFER  — 611

612 — PUT TEXT CHAR'S
IN BUFFER

UPDATE MID-LINE
FORMAT INFO.  — 613

614 — BUFFER
FULL ?  —YES→  SEND BUFFER  — 615

616 — END OF
SEGMENT?  →  SEND BUFFER  — 617

618 — READ NEXT
RECORD

# FIG. 6

FIG. 7